# EUROPÄISCHE PATENTSCHRIFT

(11) **EP 2 337 425 B1**
(45) Veröffentlichungstag und Bekanntmachung des Hinweises auf die Patenterteilung: **18.04.2012**
(21) Anmeldenummer: 09015650.6
(22) Anmeldetag: 17.12.2009
(51) Int. Cl.: H05B 3/50

(54) **Elektrische Heizvorrichtung und wärmeerzeugendes Element einer elektrischen Heizvorrichtung**
Electric heating device and heating element of an electric heating device
Dispositif de chauffage électrique et élément produisant de la chaleur d'un dispositif de chauffage électrique

(43) Veröffentlichungstag der Anmeldung: 22.06.2011
(73) Patentinhaber: Eberspächer catem GmbH & Co. KG, 76863 Herxheim (DE)
(72) Erfinder: Bohlender, Franz, 76863 Herxheim bei Landau (DE)
(74) Vertreter: Grünecker, Kinkeldey, Stockmair & Schwanhäusser

(56) Entgegenhaltungen:
- EP-A1- 1 432 287
- EP-A1- 1 515 587
- EP-A1- 1 564 503
- WO-A1-2007/049746
- US-A- 5 377 298

## Beschreibung

Die vorliegende Erfindung betrifft eine elektrische Heizvorrichtung mit wenigstens einem wärmeerzeugenden Element mit wenigstens einem PTC-Element und beidseitig daran anliegenden Leiterbahnen zur Bestromung des PTC-Elementes und mit wärmeabgebenden Elementen, die Gegenflächen zur Anlage des wärmeerzeugenden Elementes ausbilden.

Solche elektrischen Heizvorrichtungen sind allgemein bekannt und kommen insbesondere als Heizvorrichtungen in Kraftfahrzeugen zum Einsatz.

Als gattungsbildend kann beispielsweise die EP 2 109 345 A1 angesehen werden, die eine elektrische Heizvorrichtung zur Lufterwärmung offenbart und bei welcher die wärmeabgebenden Elemente als Lamellenlagen ausgebildet sind, die unter Zwischenlage einer Isolierfolie gegen die wärmeerzeugenden Elemente anliegen, d. h. die Gegenfläche zur Anlage des wärmeerzeugenden Elementes ausbilden. Das wärmeerzeugende Element umfasst bei diesem Stand der Technik ein zweiteiliges Gehäuse, wobei jedes Gehäuseteil eine der beiden Leiterbahnen einschließt. Die beiden Gehäuseteile sind unter Zwischenlage eines kompressiven Dichtmittels gegeneinander gelegt. Hierdurch ist die Möglichkeit geschaffen, durch einen von außen wirkenden Druck, beispielsweise den Druck einer Feder, die einen Schichtaufbau aus mehreren Lagen von wärmeabgebenden und wärmeerzeugenden Elementen unter Vorspannung in einem Rahmen hält, die Leiterbahnen unmittelbar an das PTC-Element anzulegen, so dass Strom zuverlässig in das PTC-Element eingeleitet und Wärme aus dem PTC-Element ausgekoppelt werden kann.

Bei einem anderen Stand der Technik EP 1 931 176 A1 befindet sich das wärmeerzeugende Element in einer einseitig offenen U-förmigen Tasche und wird über ein Keilelement in der Tasche verkeilt. Das Keilelement liegt unter Zwischenlage einer elektrischen Isolierschicht gegen das wärmeerzeugende Element an, um dieses elektrisch von den die Tasche bildenden Wandungen zu entkoppeln. Die Wandungen sind üblicherweise Teil eines einheitlichen Gehäuses, welches eine Heizkammer umfasst, die von dem zu erwärmenden Fluid durchströmt werden kann. Das in die Tasche eingebrachte Keilelement soll hierbei sicherstellen, dass die Leiterbahnen mit guter Kontaktierung gegen die PTC-Elemente anliegt. Bei dem vorerwähnten Stand der Technik umfasst das wärmeerzeugende Element mehrere unmittelbar benachbart vorgesehene PTC-Heizelemente.

Bei einem weiteren Stand der Technik gemäß der EP 1 574 791 A1 sind mehrere wärmeabgebende Elemente geschichtet zu mehreren wärmeerzeugenden Elemente in einem Rahmen vorgesehen. Die wärmeabgebenden Elemente umfassen Lamellen, die sich im Wesentlichen quer zu den Lagen des Schichtaufbaus erstrecken. Der Schichtaufbau ist unter Federvorspannung in einem Rahmen gehalten. Die wärmeabgebenden Elemente sind Aluminium-Strangpressprofile, die unmittelbar an den PTC-Heizelementen anliegen. Dementsprechend werden bei diesem vorbekannten und ebenfalls als gattungsbildend angesehenen Stand der Technik die Leiterbahnen im Sinne der vorliegenden Erfindung durch die einander gegenüberliegenden Außenflächen der wärmeabgebenden Elemente gebildet, die zwischen sich die PTC-Heizelemente einschließen und bestromen.

Bei einem weiteren Stand der Technik, der durch die EP 0 899 985 gegeben ist, liegen die PTC-Heizelemente zwischen Strangpressprofilen an, die Bohrungen zur Durchleitung eines zu erwärmenden Fluids aufweisen. Die Strangpressprofile sind gegeneinander unter Einschluss der PTC-Heizelemente verspannt, um eine möglichst gute elektrische Kontaktierung zu erreichen.

PTC-Heizelemente, die in den vorerwähnten elektrischen Heizvorrichtungen zum Einsatz kommen, sind Keramikbauteile, die durch Sintern hergestellt werden. üblicherweise wird auf den gegenüberliegenden und zur Bestromung vorgesehenen Oberflächen eine Metallisierung aufgebracht, beispielsweise im Wege des Siebdrucks. Sowohl das Aufbringen der Metallisierung, wie auch die Fertigung der PTC-Heizelemente als solches, können dazu führen, dass die Dicke der PTC-Heizelemente variiert. Bereits gewisse Dickenunterschiede führen bei fest vorgegebener Ausrichtung der Leiterbahnen zu dem Problem, dass einzelne PTC-Elemente, die nebeneinander in einer Ebene und zwischen Leiterbahnen angeordnet sind, nicht hinreichend mit den Leiterbahnen kontaktieren. Dies kann zu Funkenbildungen und thermischen Ereignissen innerhalb der elektrischen Heizvorrichtung führen, die nicht nur die Lebensdauer der elektrischen Heizvorrichtung beeinträchtigen, sondern auch eine der elektrischen Heizvorrichtung zugeordnete Steuerung in Mitleidenschaft ziehen können, insbesondere, wenn es sich um eine elektronische Steuerung mit Leistungsschaltern handelt.

Der vorliegenden Erfindung liegt das Problem zugrunde, eine elektrische Heizvorrichtung anzugeben, die mit erhöhter Sicherheit bzw. Lebensdauer betrieben werden kann.

Zur Lösung dieser Aufgabe wird mit der vorliegenden Erfindung vorgeschlagen, wenigstens eine der Leiterbahnen mit wenigstens einem Kontaktvorsprung zu versehen, der eine durch die Leiterbahn ausgebildete Anlagefläche für das PTC-Heizelement überragt. Über diesen wenigstens einen Kontaktvorsprung ist eine definierte Anlage gegen das PTC-Element möglich.

Die Erfindung lässt sich bereits bei einem einzigen PTC-Heizelement verwirklichen, welsches über einen, vorzugsweise mehrere Kontaktvorsprünge, zumindest einseitig kontaktiert ist. Der Erfindung liegt die Überlegung zugrunde, dass Dickenunterschiede bei den PTC-Heizelementen, die schon bei Abweichungen von etwa 0,03 mm zu Leitungsproblemen des dem PTC-Heizelement zuzuführenden Leistungsstromes führen, dadurch vermieden werden, dass ein Kontaktvorsprung die Stromeinleitung bewirkt.

Der Kontaktvorsprung ist dabei so ausgebildet, dass eine definierte elektrische Kontaktierung zwischen der Innenfläche der Leiterbahn und dem PTC-Heizelement über den Kontaktvorsprung erfolgen kann.

Die vorliegende Erfindung lässt sich von der Vorstellung leiten, dass die Stromeinleitung in das PTC-Element nicht mehr flächenmäßig über eine sich parallel zu dem PTC-Element erstreckende Leiterbahn, insbesondere in Form eines Blechstreifens, zu erfolgen hat, sondern vielmehr jedenfalls auch durch einen oder mehrere Kontaktvorsprünge, die die ansonsten ebene und durch die Leiterbahn gebildete Anlagefläche überragen, erfolgen kann. Diese Kontaktvorsprünge können beispielsweise durch Umformen eines die Leiterbahn bildenden Blechstreifens ausgebildet werden. Beim Umformen kann beispielsweise ein Vorsprung durch Verformen des Blechstreifens aus der Ebene des Blechstreifens herausgebogen werden, der gegen das PTC-Heizelement zur Anlage gelangt, um eine definierte Stromeinleitung zu bewirken. Dabei kann die Basis des Blechstreifens eine gewisse Elastizität bereitstellen, um den Kontaktvorsprung gegen das PTC-Heizelement anzulegen.

Dementsprechend ist es zu bevorzugen, den Kontaktvorsprung gegen das PTC-Heizelement anzulegen, ohne diesen direkt mit dem PTC-Heizelement zu verbinden. Vielmehr liegt der Kontaktvorsprung vorzugsweise unter Vorspannung auf dem PTC-Element, insbesondere der auf dem PTC-Heizelement aufgebrachten Metallisierung auf.

Gemäß einer bevorzugten Weiterbildung der vorliegenden Erfindung ist der Kontaktvorsprung durch Freischneiden und Biegen eines die Leiterbahn bildenden Blechstreifens die Anlagefläche des Blechstreifens überragend ausgeformt und einteilig an dem Blechstreifen ausgebildet. Eine solche bevorzugte Weiterbildung schafft von vornherein eine einfache Zuordnung zwischen der Lage des PTC-Heizelementes und der Lage des Blechstreifens, der üblicherweise in einem Gehäuse oder dergleichen in vorbestimmter Lage gehalten ist, der auch das wenigstens eine PTC-Heizelement positioniert. Darüber hinaus lässt sich die Leiterbahn bei der Fertigung der elektrischen Heizvorrichtung leicht handhaben, da der Kontaktvorsprung und die Leiterbahn einteilig ausgebildet sind. Erst recht gilt das für diejenige Fallgestaltung, bei der mehrere Kontaktvorsprünge ausgebildet sind.

Im Hinblick auf die Anwendung der elektrischen Heizvorrichtung, insbesondere bei Heizvorrichtungen, die mit hochvoltigen Strömen betrieben werden, wird gemäß einer Weiterbildung der vorliegenden Erfindung vorgeschlagen, das wärmeerzeugende Element wenigstens einseitig unter Zwischenlage einer elektrischen Isolierlage an der Gegenfläche anliegend vorzusehen. Diese Isolierlage kann beispielsweise eine keramische Isolierlage sein. Die Isolierlage kann auch mehrschichtig aufgebaut sein, beispielsweise aus einer Keramikschicht mit einer darauf laminierten Kunststofffolie, beispielsweise aus Polyamid oder Polyimid. Dabei wird regelmäßig die relativ spröde Keramiklage unmittelbar gegen die Leiterbahn anliegen, die üblicherweise trotz des Vorsehens von einem oder mehreren Kontaktvorsprüngen auf der dem PTC-Heizelement abgewandten Seite eben und flächig ausgeformt ist. So wird die Keramiklage flächig und danach relativ bruchsicher abgestützt.

Besonders wirkungsvoll erweist sich die vorliegende Erfindung bei einer elektrischen Heizvorrichtung mit mehreren PTC-Heizelementen, die benachbart zueinander vorgesehen sind, vorzugsweise unmittelbar benachbart zueinander, wobei jedem der PTC-Heizelemente wenigstens ein Kontaktvorsprung zugeordnet ist. Es hat sich nämlich herausgestellt, dass hohe Heizleistungen und eine effektive PTC-Heizvorrichtung nicht mit einstückigen PTC-Heizelementen erreicht werden kann. Statt dessen sollten mehrere PTC-Heizelemente in einem gemeinsamen Gehäuse unmittelbar benachbart zueinander vorgesehen sein, und zwar zwischen zwei sich im Wesentlichen parallel erstreckenden Leiterbahnen. Da diese Leiterbahnen immer eine gewisse Steifigkeit aufweisen, können die oben erwähnten Dickenunterschiede bei einer solchen leistungsfähigen elektrischen Heizvorrichtung mitunter nicht mit der notwendigen Genauigkeit mit der Leiterbahn kontaktieren.

Im Hinblick auf eine bestmögliche Kontaktierung, wird gemäß einer Weiterbildung der vorliegenden Erfindung vorgeschlagen, dass Kontaktvorsprünge an beiden Seiten des bzw. der PTC-Elemente vorgesehen sind. Sofern mehrere PTC-Heizelemente über eine gemeinsame Leiterbahn bestromt werden, ist zu jedem PTC-Heizelement vorzugsweise jeweils beidseitig wenigstens ein Kontaktvorsprung vorgesehen.

Die vorliegende Erfindung lässt sich auf besonders wirkungsvolle Weise bei einer elektrischen Heizvorrichtung verwirklichen, die wenigstens eine endseitig offene U-förmige Ausnehmung umfasst, in die das PTC-Heizelement mit daran anliegenden Blechstreifen zusammen mit einem Keilelement eingebracht sind, über welches der geschichtete Aufbau bestehend aus den wenigstens zwei Blechstreifen und dem wenigstens einen PTC-Element in der U-förmigen Ausnehmung geklemmt gehalten ist. Das Keilelement kann dabei aus einem isolierenden Material gebildet sein. Üblicherweise wird auf der Außenseite des Blechstreifens, vorzugsweise beider Blechstreifen eine Isolierlage vorgesehen, um das PTC-Heizelement elektrisch von der U-förmigen Ausnehmung und damit dem einen Gehäuse der elektrischen Heizvorrichtung zu entkoppeln. Die U-förmige Ausnehmung ragt bei dieser bevorzugten Weiterbildung in eine Heizkammer hinein und ist einseitig offen, und zwar zu einer Kammer der elektrischen Heizvorrichtung, die üblicherweise die Steuervorrichtung, zumindest aber Leiterbahnen umfasst, mit denen üblicherweise mehrere in einer U-förmigen Ausnehmung vorgesehene PTC-Heizelemente gruppiert und/oder elektrisch an Schaltelemente einer Steuervorrichtung angeschlossen sind, wie dies in der europäischen Patentanmeldung EP 1 872 986 A1 offenbart ist. Bei dieser Heizvorrichtung sind die Gegenflächen, die durch die gegenüberliegenden Innenseiten der offenen U-förmigen Ausnehmung gebildet sind, starr relativ zueinander vorgesehen. Auch das Keilelement kann lediglich eine Verklemmung der PTC-Heizelemente in der U-förmigen Ausnehmung gegen benachbarte Blechstreifen bewirken. Bereits bei einem geringen winkelmäßigen Versatz wirkt indes die Klemmkraft nicht gleichmäßig über die gesamte Fläche der PTC-Heizelemente, so dass über den Kontaktvorsprung dem damit einhergehenden Problem einer ungleichmäßigen und ungenauen Kontaktierung entgegengewirkt werden kann.

Gemäß einer bevorzugten Weiterbildung der vorliegenden Erfindung sind die Blechstreifen jeweils an einem Gehäuse durch Umspritzen der Blechstreifen mit einem das jeweilige Gehäuseteil bildenden Kunststoff befestigt, wobei die Gehäuseteile unter Einschluss wenigstes eines PTC-Heizelementes gefügt sind. Das Fügen erfolgt dabei vorzugsweise so, dass die beiden Gehäuseteile in einer Ebene quer zu den Ebenen der Blechstreifen verschieblich sind, um eine von außen auf die Blechstreifen wirkende Druckkraft unmittelbar auf das PTC-Heizelement zu übertragen. Beabsichtigt ist grundsätzlich die Übertragung der Druckkraft an der Phasengrenze zwischen dem Blechstreifen und dem PTC-Heizelement. Das Gehäuseteil kann in einer Weise ausgebildet sein, wie dies in der EP1 921 896 A1 beschrieben ist. Die beiden Gehäuseteile können dabei insbesondere im Hinblick auf die einseitig offene U-förmige Ausnehmung ausgebildet sein, so dass diese in die U-förmige Ausnehmung eingebracht werden können. Beim Umspritzen der Blechstreifen können auch außen daran anliegende Isolatorlagen mit dem jeweiligen Gehäuseteil verbunden werden.

Die vorliegende Erfindung stellt des Weiteren ein wärmeerzeugendes Element mit den Merkmalen von Anspruch 9 bereit. Dieses wärmeerzeugende Element gewährleistet eine Kontaktierung der jeweiligen PTC-Elemente ungeachtet eventueller dimensionaler Abweichungen. Das wärmeerzeugende Element kann in einem beliebigen Gehäuse oder einer beliebigen Umgebung vorgesehen sein. Eine verbesserte Kontaktierung zwischen den beiden Leiterbahnen und dem wenigstens einen PTC-Heizelement ergibt sich bereits dann, wenn lediglich ein einziges PTC-Heizelement vorgesehen ist. Besonders vorteilhaft wirkt es sich aus, wenn mehrere PTC-Elemente zwischen zwei sich im Wesentlichen parallel erstreckenden Leiterbahnen vorgesehen sind, von denen wenigstens eine, vorzugsweise beide mit Kontaktvorsprüngen versehen sind. Dabei sollte bevorzugt jedem einzelnen PTC-Heizelement wenigstens ein Kontaktvorsprung zugeordnet sein.

Weitere Einzelheiten und Vorteile der vorliegenden Erfindung entnehmen Sie aus der nachfolgenden Beschreibung eines Ausführungsbeispiels in Verbindung mit der Zeichnung.

In dieser zeigen:
- Figur 1: ein erstes Ausführungsbeispiel eines wärmeerzeugenden Elementes der vor- liegenden Erfindung in einer Seitenansicht;
- Figur 2: ein Blechband des in Figur 1 gezeigten Ausführungsbeispiels in Seitenansicht;
- Figur 3: die Einzelheit Z gemäß Figur 2 in vergrößerter Darstellung;
- Figur 4: ein zweites Ausführungsbeispiel eines wärmeerzeugenden Elementes in per- spektivischer Seitenansicht; und
- Figur 5: ein Ausführungsbeispiel einer elektrischen Heizvorrichtung.

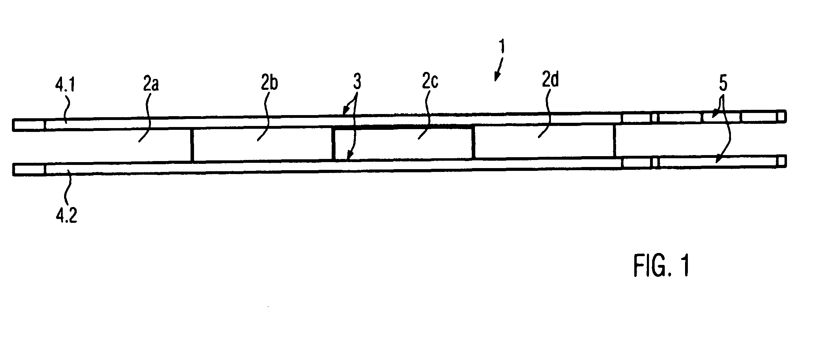

Die Figur 1 zeigt eine Seitenansicht eines Ausführungsbeispiels eines wärmeerzeugenden Elementes 1 mit mehreren in einer Ebene nebeneinander vorgesehenen PTC-Heizelementen 2, die als Keramikteile mit nicht identischer Dicke ausgebildet sind, so dass die einzelnen PTC-Heizelemente mitunter einen Abstand zu wenigstens einem der beiden als Leiterbahnen 3 vorgesehenen Blechstreifen 4 aufweisen. Dementsprechend zeigt sich beispielsweise für das PTC-Heizelement mit dem Bezugszeichen 2c ein kleiner Spalt zwischen einem oberen Blechstreifen 4.1 und der Oberfläche des entsprechenden PTC-Elementes 2c.

Die Blechstreifen 4 sind auf der rechten Seite der zeichnerischen Darstellung gemäß Figur 1 durch Stanzen zu Kontaktzungen 5 ausgebildet. Über diese Kontaktzungen 5 kann das in Figur 1 gezeigte wärmeerzeugende Element beispielsweise über Aussparungen einer Leiterplatte elektrisch angeschlossen werden.

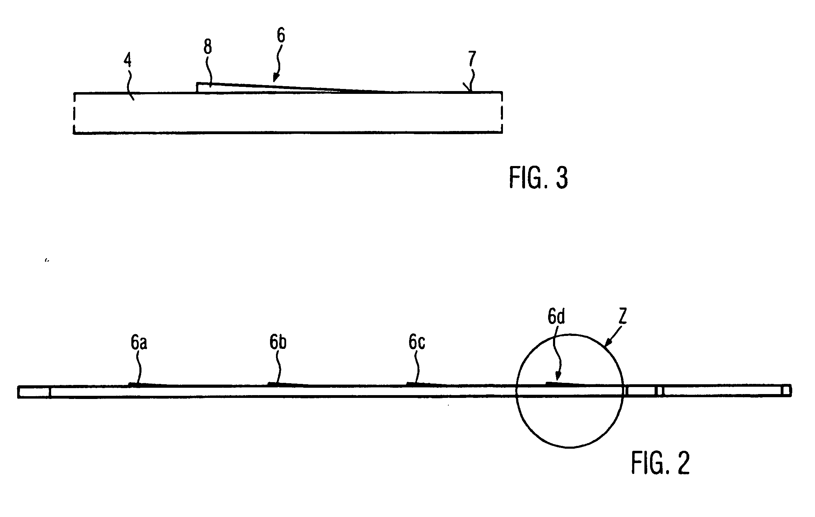

Die in Figur 1 gezeigte Anordnung ist allgemein bekannt (vgl. beispielsweise EP 1 931 176 A1 oder EP 0 899 985 A1). Sie unterscheidet sich allerdings von den vorbekannten Konfigurationen durch Details, die in den Figuren 2 und 3 beispielhaft verdeutlicht sind.

Die Figuren 2 und 3 zeigen den in Figur 1 mit Bezugszeichen 4.2 dargestellten unteren Blechstreifen. Zu jedem der PTC-Heizelemente 2a bis 2d sind an dem Blechstreifen 4.2 Kontaktvorsprünge 6 ausgebildet. Diese Kontaktvorsprünge 6 überragen geringfügig eine ebene und durch den Blechstreifen 4.2 gebildete Anlagefläche 7 für die PTC-Heizelemente 2. Die einzelnen PTC-Heizelemente 2 können gegen diese Anlagefläche 7 anliegen. Sie müssen indes nicht dort anliegen, um hinreichend kontaktiert zu werden.

Die Kontaktvorsprünge 6 sind durch Freischneiden eines Segmentes 8 aus einem mittleren Bereich des Blechstreifens 4.1 mit nachfolgendem Biegen des Segmentes 8 gebildet. Dadurch überragen die freien Enden der Kontaktvorsprünge 6 die Anlagefläche 7 maximal und zumindest mit einem Betrag, der größer als denkbare Dickenunterschiede der PTC-Heizelemente 2 ist. Die Dicke entspricht der Erstreckungsrichtung der PTC-Heizelemente 2 zwischen den beiden Blechstreifen 4.

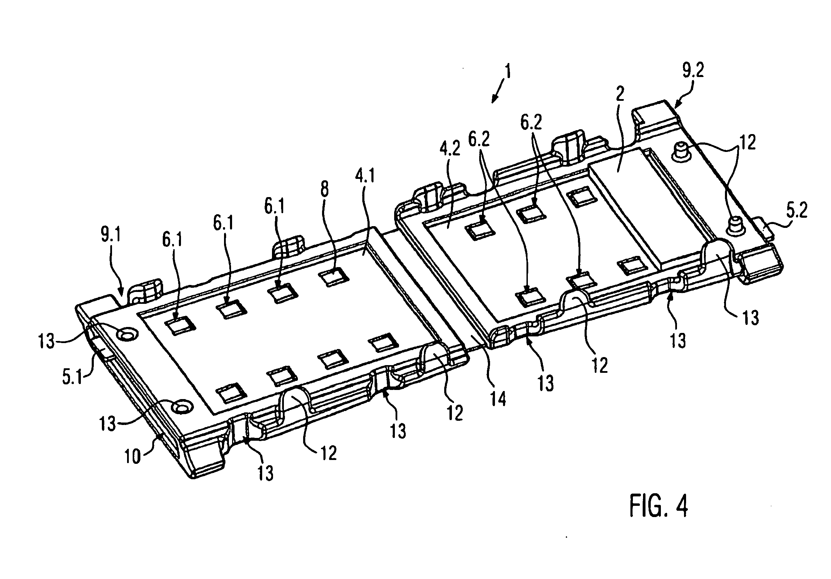

Wie Figur 4 zu entnehmen ist, wird das Segment 8 durch eine U-förmige Nut aus dem Material des Blechstreifens 4 herausgeschnitten. Zu jedem PTC-Heizelement 2 sind höhengleich zwei Kontaktzungen 5 nebeneinander vorgesehen, die an einer Seite an einem der PTC-Heizelemente 2 anliegen. Auf der gegenüberliegenden Seite sind an dem anderen Blechstreifen 4.2 ebenfalls zu jedem PTC-Heizelement 2 zwei Kontaktvorsprünge 6.2 vorgesehen.

Das in Figur 4 verdeutlichte Ausführungsbeispiel eines wärmeerzeugenden Elementes hat zwei Gehäuseteile 9.1, 9.2, die jeweils aus Kunststoff mittels Spritzgießen hergestellt sind, vorzugsweise aus einem wärmebeständigen, relativ weichelastischen Kunststoff, wie beispielweise Silikon. Beim Spritzgießen der Gehäuseteile 9.1, 9.2 werden die zuvor mittels Stanzen und Biegen vorbereiteten Blechstreifen 4 in die Spritzgießform eingelegt. Bei dem in Figur 4 gezeigten Ausführungsbeispiel werden auf der Außenseite der Blechstreifen 4, die bei geschlossenem Gehäuse die Außenseiten der Blechstreifen 4 bedecken, elektrische Isolatorlagen außenseitig gegen die Blechstreifen 4 angelegt. Die Blechstreifen 4 und die Isolatorlagen haben vorzugsweise die gleiche Abmessung. Beim Spritzgießen der Gehäuseteile 9.1 bzw. 9.2 werden die Ränder der Isolierlagen und der Leiterbahnen 3 von dem schmelzflüssigen Kunststoff eingesiegelt. Nach Verfestigen des Kunststoffs sind die Blechstreifen 4 und die Isolierlagen jeweils an einem Gehäuseteil 9.1 bzw. 9.2 befestigt.

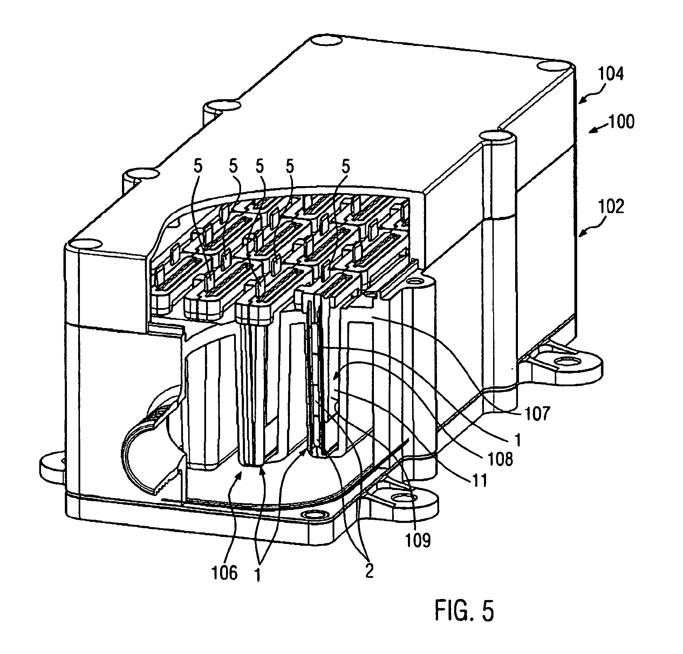

Das Gehäuseteil 9.1 bildet an seinem oberen stirnseitigen Ende eine Einschiebeöffnung 10 für ein in Figur 5 dargestelltes Keilelement 11. Beide Gehäuseteile 9.1, 9.2 sind von jeweils einer Kontaktzunge 5.1 bzw. 5.2 überragt. Des Weiteren haben die beiden Gehäuseteile 9.1. und 9.2 Verriegelungsabschnitte 12, 13, die ineinander greifen und an dem Rand der jeweiligen Gehäuseteile 9.1 und 9.2 vorgesehen sind. Hierdurch ist die Möglichkeit geschaffen, dass die Gehäuseteile 9.1 und 9.2 relativ zueinander beweglich sind, jedoch lediglich in Richtung einer Ebene, die sich im Wesentlichen quer zu der Ebene der Blechstreifen 4 erstreckt.

Zwischen den beiden Gehäuseteilen 9.1 und 9.2 ist ein Filmscharnier 14 vorgesehen, durch welches die beiden Gehäuseteile 9.1 und 9.2 unverlierbar miteinander verbunden sind. Das durch die beiden Gehäuseteile 9.1 und 9.2 gebildete Gehäuse ist daher ein einteiliges. Das Gehäuse wird bei der Montage zunächst in der vorbeschriebenen Weise zusammen mit den Blechstreifen 4 und den elektrischen Isolierlagen spritzgegossen. Danach wird durch Auflegen von PTC-Heizelementen 2 auf einen der Blechstreifen 4.2 das Gehäuse mit PTC-Heizelementen 2 bestückt. Es werden vier PTC-Elemente 2 unmittelbar benachbart nebeneinander auf den Blechstreifen 4.2 aufgelegt. Danach wird das andere Gehäuseteil 9.1 durch Verschwenken um das Filmscharnier 14 auf das eine Gehäuseteil 9.2 aufgesetzt. Die Verriegelungsabschnitte 12, 13 wirken so zusammen, dass diese Lage relativ zueinander gesichert wird.

Die Figur 5 zeigt ein Ausführungsbeispiel einer elektrischen Heizvorrichtung 100 mit einer Gehäusebasis 102, die von einem Gehäusedeckel 104 verschlossen ist. Die Gehäusebasis 102 ist wannenförmig ausgebildet und umschließt eine Heizkammer 106, welche obenseitig von einer Trennwand 107 verschlossen ist. Die Trennwand 107 wird von U-förmigen Ausnehmungen 108 durchsetzt, die nach oben und zu dem Gehäusedeckel 104 hin offen sind. Bei dem gezeigten Ausführungsbeispiel sind nebeneinander mehrere sich im Wesentlichen über die gesamte Längserstreckung der Gehäusebasis 102 erstreckende Ausnehmungen 108 vorgesehen. In jeder der Ausnehmungen 108 befinden sich hintereinander mehrere der in Figur 4 gezeigten wärmeerzeugenden Elemente 1. Die Ausnehmungen 108. bilden Gegenflächen 109 für das wärmeerzeugende Element. Diese wärmeerzeugenden Elemente 1 sind über das Keilelement 11 in den U-förmigen Ausnehmungen 108 verspannt, so dass eine gute Wärmeleitung zwischen den Wandungen der U-förmigen Ausnehmungen 108, d. h. der Gehäusebasis 102 und dem wärmeerzeugenden Element 1 gegeben ist. Des Weiteren werden die jeweiligen Leiterbahnen 3 gegen die PTC-Heizelemente 2 gedrängt. Bei dimensionsmäßigen Abweichungen in Dickenrichtung zwischen einzelnen PTC-Heizelementen 2 führt dies allerdings bei anliegendem Blechstreifen 4 an einer Außenfläche eines der PTC-Heizelemente 2 noch nicht zu einer unzureichenden Kontaktierung eines anderen PTC-Heizelementes 2, da jedenfalls die Kontaktvorsprünge 6 die Blechstreifen 4 mit ihren Anlageflächen 7 in Richtung auf das PTC-Heizelement 2 überragen und somit einen guten elektrischen Kontakt sicherstellen.

Details des in Figur 5 dargestellten Ausführungsbeispiel sind im Übrigen in der auf die Anmelderin zurückgehenden EP 1 931 176 A1 offenbart, auf deren Offenbarung hingewiesen und deren Offenbarung durch diese Bezugnahme in den Offenbarungsgehalt der vorliegenden Anmeldung aufgenommen wird.

Die vorliegende Erfindung ist nicht auf das gezeigte Ausführungsbeispiel beschränkt. In gleicher Weise ist es möglich, Kontaktvorsprünge an Heizelementen vorzusehen, die in elektrischen Heizvorrichtungen zur Lufterwärmung vorgesehen sind. Soweit vorstehend auf Blechstreifen, die die Leiterbahnen ausbilden, abgestellt wurde, so sei darauf hingewiesen, dass es lediglich auf die funktionale Verwirklichung von Leiterbahnen ankommt, von denen die Kontaktvorsprünge 6 in Richtung auf das PTC-Element abragen. Solche Kontaktvorsprünge können auch durch ein wärmeabgebendes Element selbst gebildet sein, oder aber zwischen den Randflächen eines wärmeabgebenden Elementes und dem diesen wärmeabgebenden Element zugeordneten wärmeerzeugenden Element vorgesehen sein. Neben der Verkeilung der PTC-Heizelemente 2 zwischen den beiden Leiterbahnen, ist es auch möglich, die PTC-Heizelemente elastisch durch Federn zu klemmen (vgl. beispielsweise EP 1 370 117 A2).

### Bezugszeichenliste

- 1: wärmeerzeugendes Element
- 2: PTC-Heizelement
- 3: Leiterbahnen
- 4: Blechstreifen
- 5: Kontaktzunge
- 6: Kontaktvorsprünge
- 7: Anlagefläche
- 8: Segment
- 9.1: Gehäuseteil
- 9.2: Gehäuseteil
- 10: Einschiebeöffnung
- 11: Keilelement
- 12: Verriegelungsabschnitt
- 13: Verriegelungsabschnitt
- 14: Filmscharnier
- 100: elektrische Heizvorrichtung
- 102: Gehäusebasis
- 104: Gehäusedeckel
- 106: Heizkammer
- 107: Trennwand
- 108: Ausnehmung
- 109: Gegenfläche

## Patentansprüche

1. Elektrische Heizvorrichtung (100) mit wenigstens einem wärmeerzeugenden Element (1) mit wenigstens einem PTC-Heizelement (2) und beidseitig daran anliegenden Leiterbahnen (3) zur Bestromung des PTC-Heizelementes (2) und mit wärmeabgebenden Elementen (108), die Gegenflächen (109) zur Anlage des wärmeerzeugenden Elementes (1) ausbilden,
**dadurch gekennzeichnet,**
**dass** wenigstens eine der Leiterbahnen (3) wenigstens einen Kontaktvorsprung (6) aufweist, der eine durch die Leiterbahn (3) gebildete Anlagefläche (7) für das PTC-Heizelement (2) überragt.

2. Elektrische Heizvorrichtung (100) nach Anspruch 1, **dadurch gekennzeichnet, dass** der Kontaktvorsprung (6) elastisch vorgespannt gegen das PTC-Heizelement (2) anliegt.

3. Elektrisches Heizvorrichtung (100) nach Anspruch 1 oder 2, **dadurch gekennzeichnet, dass** die Leiterbahn (3) einen Blechstreifen (4) umfasst und dass der Kontaktvorsprung (6) durch Freischneiden und Biegen des Blechstreifens (4) die Anlagefläche (7) überragend ausgeformt und einteilig an dem Blechstreifen (4) ausgebildet ist.

4. Elektrische Heizvorrichtung (100) nach einem der vorherigen Ansprüche, **dadurch gekennzeichnet, dass** das wärmeerzeugende Element (1) wenigstens einseitig unter Zwischenlage einer elektrischen Isolierlage an der Gegenfläche (109) anliegt.

5. Elektrische Heizvorrichtung (100) nach einem der vorherigen Ansprüche, **dadurch gekennzeichnet, dass** mehrere PTC-Heizelemente (2) benachbart zueinander vorgesehen sind und dass jedem der PTC-Heizelemente (2) wenigstens ein Kontaktvorsprung (6) zugeordnet ist.

6. Elektrische Heizvorrichtung (100) nach einem der vorherigen Ansprüche, **dadurch gekennzeichnet, dass** die Kontaktvorsprünge (6.1; 6.2) an beiden Seiten des PTC-Heizelementes (2) vorgesehen sind und dass zu jedem PTC-Heizelement (2) beidseitig wenigstens jeweils ein Kontaktvorsprung (6.1; 6.2) vorgesehen ist.

7. Elektrische Heizvorrichtung (100) nach einem der vorherigen Ansprüche, **dadurch gekennzeichnet, dass** die beiden Blechstreifen (4) an einem Gehäuse (9.1, 9.2) befestigt sind, welches eine Ausnehmung (108) für das wenigstens eine PTC-Heizelement (2) ausbildet, dass die Gegenflächen (109) durch eine endseitig offene U-förmige Ausnehmung (108) gebildet sind, die in eine Heizkammer (106) hineinragen, die von zu erwärmenden Fluid durchströmbar ist, und dass das wärmeerzeugende Element (1) durch wenigstens ein Keilelement (11) in der U-förmigen Ausnehmung (108) verklemmt ist.

8. Elektrische Heizvorrichtung (100) nach einem der vorherigen Ansprüche, **dadurch gekennzeichnet, dass** die beiden Blechstreifen (4) jeweils an einem Gehäuseteil (9.1; 9.2) durch Umspritzen der Blechstreifen (4) mit einem das jeweilige Gehäuseteil (9.1, 9.2) bildenden Kunststoff befestigt sind, die miteinander unter Einschluss des wenigstens einen PTC-Heizlementes (2) gefügt sind.

9. Wärmeerzeugendes Element (1) mit wenigstens einem PTC-Element (2) und beidseitig flächig daran anliegenden Leiterbahnen (3) zur Bestromung des PTC-Heizelementes (2), **dadurch gekennzeichnet, dass** wenigstens eine der Leiterbahnen (3) wenigstens einen Kontaktvorsprung (6) aufweist, der eine durch die Leiterbahn (3) gebildete Anlagefläche (7) für das PTC-Heizelement (2) überragt.

## Claims

1. Electrical heating device (100) with at least one heat generating element (1) with at least one PTC heating element (2) having strip conductors (3) contacting it on both sides for the electrical supply of the PTC heating element (2) and with heat emitting elements (108) which form the opposing surfaces (109) for the abutment of the heat generating element (1),
**characterised in that**
at least one of the strip conductors (3) has at least one contact projection (6) which extends beyond a locating face (7) formed by the strip conductor (3) for the PTC heating element (2).

2. Electrical heating device (100) according to Claim 1, **characterised in that** the contact projection (6) abuts, elastically tensioned, the PTC heating element (2).

3. Electrical heating device (100) according to Claim 1 or 2, **characterised in that** the strip conductor (3) comprises a sheet metal strip (4) and that the contact projection (6) is formed, protruding beyond the locating face (7), by cutting and bending the sheet metal strip (4) and is formed on the sheet metal strip (4) in one part.

4. Electrical heating device (100) according to one of the previous claims, **characterised in that** the heat generating element (1) abuts at least on one side the opposing surface (109) with the intermediate positioning of an electrical insulating layer.

5. Electrical heating device (100) according to one of the previous claims, **characterised in that** a plurality of mutually adjacent PTC heating elements (2) are provided and that at least one contact projection (6) is assigned to each of the PTC heating elements (2).

6. Electrical heating device (100) according to one of the previous claims, **characterised in that** the contact projections (6.1, 6.2) are provided on both sides of the PTC heating element (2) and that at least one contact projection (6.1, 6.2) is provided on both sides of each PTC heating element (2)

7. Electrical heating device (100) according to one of the previous claims, **characterised in that** the two sheet metal strips (4) are attached to a housing (9.1, 9.2) which forms a recess (108) for the at least one PTC heating element (2), that the opposing surfaces (109) are formed by a U-shaped recess (108) open on one side, which protrude into a heating chamber (106), through which heated fluid can pass, and that the heat generating element (1) is clamped in the U-shaped recess (108) by at least one wedge element (11).

8. Electrical heating device (100) according to one of the previous claims, **characterised in that** the two sheet metal strips (4) are each attached to a housing part (9.1, 9.2) by extrusion-coating of the sheet metal strips (4) with a plastic which forms the corresponding housing parts (9.1, 9.2), which are joined together, enclosing at least one PTC heating element (2).

9. Heat generating element (1) with at least one PTC element (2) and strip conductors (3) extensively abutting it on both sides for the electrical supply of the PTC heating element (2), **characterised in that** at least one of the strip conductors (3) has at least one contact projection (6), which protrudes beyond a locating face (7) formed by the strip conductor (3) for the PTC heating element (2).

## Revendications

1. Dispositif de chauffage électrique (100) comportant au moins un élément de production de chaleur (1) avec au moins un élément chauffant PTC (2) et des pistes conductrices (3) appliquées de part et d'autre de celui-ci pour alimenter l'élément chauffant PTC (2), ainsi que des éléments dispensateurs de chaleur (108) qui constituent des surfaces correspondantes (109) pour l'agencement de l'élément de production de chaleur (1),
**caractérisé**
**en ce qu'**au moins une des pistes conductrices (3) comporte au moins une languette de contact (6) qui dépasse d'une surface de contact (7) pour l'élément chauffant PTC (2) constituée par la piste conductrice (3).

2. Dispositif de chauffage électrique (100) selon la revendication 1, **caractérisé en ce que** la languette de contact (6) est appliquée avec une précontrainte élastique contre l'élément chauffant PTC (2).

3. Dispositif de chauffage électrique (100) selon la revendication 1 ou 2, **caractérisé en ce que** la piste conductrice (3) comporte une bande de tôle (4) et **en ce que** la languette de contact (6) est formée en découpant et en pliant la bande de tôle (4) en dépassant de la surface de contact (7) et est formée d'une seule pièce avec la bande de tôle (4).

4. Dispositif de chauffage électrique (100) selon l'une des revendications précédentes, **caractérisé en ce que** l'élément de production de chaleur (1) est appliqué au moins d'un côté contre la surface correspondante (109) avec une couche d'isolation électrique intercalée.

5. Dispositif de chauffage électrique (100) selon l'une des revendications précédentes, **caractérisé en ce qu'**une pluralité d'éléments chauffants PTC (2) sont agencés de manière adjacente et **en ce que** chacun des éléments chauffants PTC (2) est associé à au moins une languette de contact (6).

6. Dispositif de chauffage électrique (100) selon l'une des revendications précédentes, **caractérisé en ce que** les languettes de contact (6.1 ; 6.2) sont agencées de part et d'autre de l'élément chauffant PTC (2) et **en ce que** chaque élément chauffant PTC (2) est pourvu d'au moins une languette de contact (6.1 ; 6.2) de part et d'autre.

7. Dispositif de chauffage électrique (100) selon l'une des revendications précédentes, **caractérisé en ce que** les deux bandes de tôle (4) sont fixées à un boîtier (9.1 ; 9.2) qui constitue un logement (108) pour l'au moins un élément chauffant PTC (2), **en ce que** les surfaces correspondantes (109) sont constituées par un logement en forme de U (108) ouvert d'un côté et dépassent vers l'intérieur d'une chambre de chauffage (106) qui peut être traversée par un fluide à réchauffer, et **en ce que** l'élément de production de chaleur (1) est serré par au moins une cale (11) dans le logement en forme de U (108).

8. Dispositif de chauffage électrique (100) selon l'une des revendications précédentes, **caractérisé en ce que** les deux bandes de tôle (4) sont fixées chacune à un élément du boîtier (9.1 ; 9.2) par moulage à injection en intégrant chaque bande de tôle (4) avec une matière synthétique constituant chacun des éléments de boîtier (9.1 ; 9.2), qui sont accouplés entre eux en incorporant l'au moins un élément chauffant PTC (2).

9. Élément de production de chaleur (1) avec au moins un élément PTC (2) et des pistes conductrices appliquées de part et d'autre contre sa surface (3) pour alimenter l'élément chauffant PTC (2), **caractérisé en ce qu'**au moins une des pistes conductrices (3) comporte au moins une languette de contact (6) qui dépasse d'une surface de contact (7) pour l'élément chauffant PTC (2) constituée par la piste conductrice (3).
